# EUROPEAN PATENT APPLICATION

(11) **EP 3 179 134 A1**
(43) Date of publication of application: **14.06.2017**
(21) Application number: 16202822.9
(22) Date of filing: 08.12.2016
(51) Int. Cl.: F16H 53/02

(54) **CAMSHAFT WITH A REMOVABLE DOUBLE CAM**

(30) Priority: 09.12.2015 CZ 20150875
(71) Applicant: VÚTS, a.s., Liberec XI - Ruzodol I 460 01 Liberec (CZ)
(72) Inventor: Jirasko, Petr, 463 11 Liberec 30 (CZ); Ondrasek, Jiri, 460 07 Liberec IX - Januv Dul (CZ)
(74) Representative: Musil, Dobroslav

(57) **Abstract**

The invention relates to a camshaft with a removable double cam where the shaft is provided with a pair of the outer contact surfaces for mounting each cam and each cam is provided with an inner contact surface. On the shaft (1), one outer conical polygonal contact surface (10) is created for each cam (4) of the double cam and each of the cams (4) of the double cam is provided with one inner conical polygonal contact surface (40) through which this cam (4) is replaceably mounted on the respective outer conical polygonal contact surface (10) on the shaft (1).

## Description

### Technical field

The invention relates to a camshaft with a removable double cam where the shaft is provided with a pair of outer contact surfaces for mounting each cam and each cam is provided with an inner contact surface.

### State of the art

Many technical applications use cam transmissions when on the revolving shaft cams are arranged, for example, in a disassemblable manner, removably mounted, etc. In the case of using cams with so called forced contact, for example, in stepper transmissions with a forced rest etc., so called double cams are used, when one cam ensures the function movement and the other ensures reaching a precise and stable still position of the output shaft. An arrangement is known in which on the cylindrical part of the shaft two cams are pressed or placed using some other method and they are precisely positioned (turned) to one another. In this precisely set position, both cams are pinned together, i.e. connected with pins, for example, through a hub created on the shaft between the cams, and further both cams are secured with screws and nuts which ideally go through both cams. In another known embodiment, both cams are produced as one segment which is situated on the shaft, for example, it is pressed on the shaft. The transmitted torque is limited by the sliding capacity of the above stated pins used and possibly even by the sliding capacity of the precise screws possibly used for joining the cams or it is possibly limited by the sliding capacity of the pressed connection of the shaft and the segment with the pair of cams. This embodiment is limiting especially from the aspect of the size of the transmitted torque and it is even laborious.

A possible solution, in particular from the point of view of the dimension of the transmitted torque, could be using another type of contact surfaces between the cam and the shaft, in particular of so called polygonal connections, which are generally known from different embodiments. Their advantage is in particular the possibility of the transmission of a high torque, easy assembly and disassembly. The disadvantage, on the other hand, is a relatively difficult production.

For example, CN 203 321 805 U describes a solution in which on the shaft a number of cams is situated. On the perimeter the shaft is provided with placing rings with a hexagonal cross section which create the outer polygonal surfaces for placing each cam. Each cam is provided with a hexagonal hole creating the inner polygonal surface and the size of which corresponds to the hexagonal ring on the shaft. The individual surfaces of the inner and outer hexagon are parallel with the axis of rotation of the shaft, respectively the cam. The relative position of the hexagonal polygonal surfaces on the shaft and the cam determines the orientation of the cam to the shaft and as well the orientation to other cams. The advantage of this solution is a relatively undemanding production process. The disadvantage of this solution is the tendency of this type of polygonal connection to wearing out through pressing out with all the consequences.

DE 10 2007 051 517 A1 discloses a solution of the polygonal connection of a hollow shaft and a cam or another means placed on the shaft, for example a toothed wheel, where along the whole length the shaft has an axially symmetrical bulged cross section on which the individual cams are situated. The polygonal connection has the faces parallel with the axis of revolution of both the shaft and the cam. The orientation of the cam to the shaft and of the individual cams to each other is determined by positioning the cam to the shape of the surface of the shaft.

There are solutions which use a completely general shape of the polygonal connection of the shaft and the cam. These solutions are very demanding on precision of the production and on the precision of the mutual orientation of the polygonal connection on the shaft to the shaft and of the polygonal connection on the cam to the shape working surface of the cam and at the same time to the polygonal surface on the shaft and its orientation to other polygonal surfaces on the same shaft. A common disadvantage of the state of the art is the necessity of securing the axial position and axial stability of the cam on the shaft in combination with ensuring the sufficient durability of the polygonal connection between the cam and the shaft.

The aim of the invention is to remove or at least minimize the disadvantages of background art.

### Principle of the invention

The aim of the invention was achieved by a cam shaft with a removable double cam the principle of which consists in that on the shaft one outer conical polygonal contact surface is created for each cam of the double cam and each of the cams of the double cam is provided with one inner conical polygonal contact surface through which the cam is removably mounted on the respective outer conical polygonal contact surface on the shaft.

This solution is advantageous in particular from the aspect of a high torque transmitted, replaceability of the cams and the overall durability. Another advantage is the fact that the conical polygonal connection makes it possible to define also the mutual turning of the cams of the double cam and their axial position on the shaft.

According to a preferred embodiment, each of the outer conical polygonal contact surfaces is directed with its apex of its creating cone towards the other adjacent free end of the shaft, which makes the assembly or replacement of each of the cams from one end of the shaft possible.

According to another preferred embodiment, both outer conical polygonal contact surfaces are directed with the apex of their creating cone towards one adjacent free end of the shaft so that the assembly and possible replacement of the cams is done from one common end of the shaft.

From the aspect of the advantages of the production while keeping the loading capacity and durability, the shape of the outer conical polygonal contact surfaces and the inner conical polygonal contact surfaces is composed of two triples of identical circular arches, of which the first triple of the circular arches has a smaller radius and the second triple of the circular arches has a greater radius and the individual circular arches alternate regularly and continue each other in the direction of the perimeter of the conical polygonal contact surfaces, ideally they contact each other tangentially, i.e. the circular arches of the radii R1 and R2 have a common tangent at the points of connection.

From the aspect of the advantageous action of the force and lowering the action of the axial forces in the conical contact surfaces, the conical polygonal contact surfaces have an identical conicity within the range from 1:10 to 1:3, the best 1:5 or near to 1:5.

For production reasons, it is advantageous if both outer conical polygonal contact surfaces are created on a common polygonal hub, which is formed on the shaft, and in the faces of the polygonal hub, in the direction parallel to the axis of revolution of the shaft, holes are created with the inner threads for screwing the axial securing screws over the rings which are slid through their central holes on the shaft and bear on the adjacent sidewall of the cam.

In another exemplary embodiment, both outer conical polygonal contact surfaces are created on a common polygonal hub in which through holes are formed and in one of the rings, which are slid through their central holes on the shaft and bear on the adjacent sidewall of the cam, holes with inner threads are formed, whereas in the other ring holes are formed with steps for the screw heads with which these rings are drawn to each other and the cams are axially secured on the shaft.

In particular from the aspect of lowering the mass of the shaft, it is advantageous if each outer conical polygonal contact surface is created on an independent polygonal hub and both polygonal hubs are created on the shaft and on the faces of each polygonal hub, in the direction parallel to the axis of rotation of the shaft, holes with inner threads are formed for screwing the securing screws over the rings which are slid through their central holes on the shaft and bear on the adjacent sidewall of the cam.

### Description of drawings

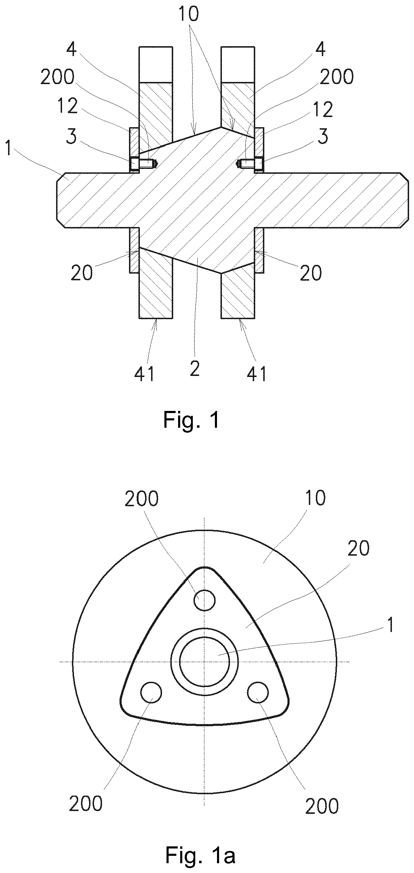

The invention is schematically represented in the drawing, where Fig. 1 represents the longitudinal section of the camshaft with a removable double cam, Fig. 1a represents the front view of the individual shaft without the cams, Fig. 2 represents a side-view of the cam, Fig.2a represents a section of the cam from Fig. 2 through the A-A plane, Fig. 3 represents creation of the polygonal surface with an inscribed equilateral triangle and Fig. 3 represents creation of the polygonal surface with a circumscribed equilateral triangle.

### Examples of the invention embodiment

The invention will be described on the exemplary embodiment of the cam shaft with a removable double cam in which on the shaft **1** two cams **4** are mounted removably in a mutually defined position of their operating track towards the realization of the cam transmission with forced contact, for example for realization of a cam transmission with forced rest in which the input shaft of the transmission rotates in continuous rotation movement and the output shaft of the transmission rotates intermittently in the defined angles of turns and between the individual turns the output shaft is in the rest position with the defined angle of turn. One cam **4** of the double cam ensures the arrest of the rotation of the output shaft of the transmission in the defined position, i.e. with the defined arrest and dwell of the shaft in the turned position.

On the shaft **1** one outer conical polygonal contact surface **10** is created for each cam **4** of the double cam. In the represented example of embodiment, both outer conical polygonal contact surfaces **10** are situated with their gradient from each other, i.e. with the apex of their creating cone they are each directed to a different adjacent free end of the shaft **1.** In the non represented embodiment, both outer conical polygonal contact surfaces **10** are situated with their gradient in the same direction, i.e. with the apex of the creating cone they both point towards one adjacent free end of the shaft **1.** In this unillustrated embodiment, for assembly reasons of both cams **4** of the double cam it is important that the outer conical polygonal contact surface **10,** which is in the direction from the cone further, i.e. "back" outer conical polygonal contact surface **10,** has a greater size than the "front" outer conical polygonal contact surface **10.**

In the represented example of embodiment, both outer conical polygonal contact surfaces **10** are created on the common polygonal hub **2** which is formed on the shaft **1** and on the faces **20** of the polygonal hub **2,** in the direction parallel to the axis of rotation of the shaft **1**, holes **200** with the inner thread for screwing the axial securing screws **3** (described below) are formed.

In an unillustrated example of embodiment, each outer conical polygonal contact surface **10** is created on an independent polygonal hub **2** and both polygonal hubs **2** are created on the shaft **1** and on the faces **20** of each polygonal hub **2**, in the direction parallel to the axis of rotation of the shaft **1,** holes **200** are formed with inner threads for screwing the further stated axial securing screws **3.** The holes **200** and the axial securing screws **3** are symmetrically situated along the perimeter of the shaft **1** and the cam **4.**

Each cam **4** of the double cam is provided with the inner conical polygonal contact surface **40,** with which this cam **4** is replaceably mounted on the respective outer conical polygonal contact surface **10** on the shaft **1.** It is obvious that the shape and size of the respective outer conical polygonal contact surface **10** on the shaft **1** and the respective inner conical polygonal contact surfaces **40** correspond to each other. Because of the necessity of the mutual positioning of both cams **4** of the double cam to one another in the direction of the rotation of the shaft **1,** either both outer conical polygonal contact surfaces **10** on the shaft **1** are turned relatively or both inner conical polygonal contact surfaces **40** on each of the cams **4** are turned relatively. In an ideal case, both cams **4** are identical from the aspect of the arrangement of the outer working surface **41** and both are produced concurrently during the concurrent production of the outer working surface **41** of both cams and the inner conical polygonal contact surface **40** of both cams **4** and the position (orientation) of the concurrently produced inner conical polygonal contact surface **40** on both cams **4** to the concurrently produced outer working surface **41** of both cams **4** is chosen so that after the concurrent production of both cams **4,** both of the cams **4** are only turned in the mirrored manner and in this position they are placed on the respective outer polygonal surfaces **10** on the shaft **1**, which results in achieving the required relative turning of both cams **4** to one another even in the production of both cams **4** at the same time. The only difference between the cams **4** produced concurrently is in the size of the inner conical polygonal contact surface **40,** which is determined by the conicity of this surface **40** and by the fact that in the concurrent production of both cams **4**, the cams **4** are arranged immediately one behind another. The size of the outer conical polygonal connection surface **10** on the shaft **1** is for each cam **4** adjusted to different inner size of the inner conical polygonal contact surface **40** of both cams **4.** The conicity of the outer polygonal contact surface **10** on the shaft **1** and the assigned respective inner polygonal conical contact surfaces **40** on the respective cam **4** is in principle identical and is ideally within the range of 1:10 to 1:3, best 1:5 or near 1:5, which ensures not only the determination of the axial position of each cam **4** to the shaft **1** but it even makes assembly and disassembly of the respective cam **4** from the mounting on the shaft **1** easier and, at the same time, possible spontaneous sliding of the respective cam **4** from its mounting on the shaft **1** is limited. Against a possible spontaneous sliding of the cam **4** from the respective conical outer polygonal contact surface **10** on the shaft **1**, each cam **4** is secured with a ring **12** which is slid through its central hole on the shaft **1** and fixed to the shaft **1** with axial securing screws **3** screwed in the above stated holes **200** with inner threads in the faces **20** of the polygonal hub **2**.

In an unillustrated example of embodiment, through holes are formed in the common polygonal hub **2** and in one of the rings **12,** which are slid through their central holes on the shaft **1** and bear on the adjacent sidewall of the respective cam **4,** holes are created with inner threads and in the other ring **12,** holes are formed with steps for the heads of screws with which the rings **12** are drawn to each other and the cams **4** are axially secured on the shaft **1.** This embodiment can be used also for creating individual polygonal hubs **2**.

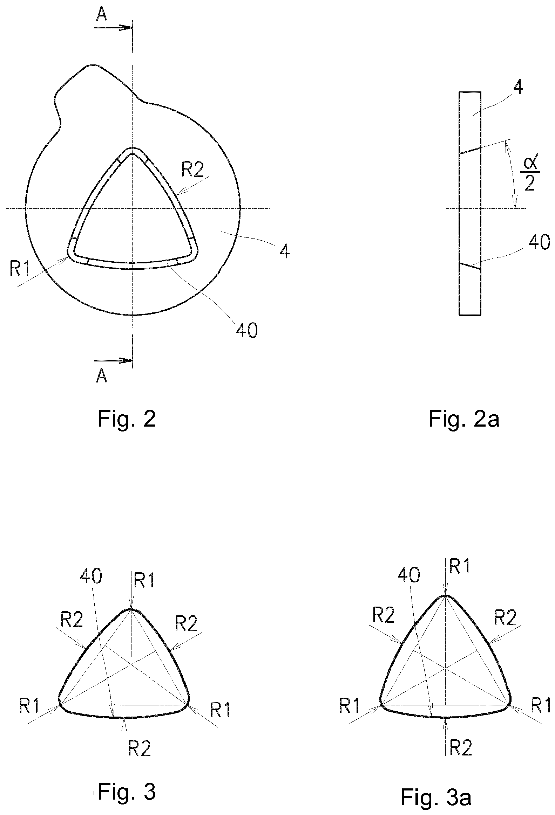

The outer polygonal contact surface **10** and the inner conical polygonal contact surface **40** are in the represented example embodiment composed of two triples of the identical circular arches **R**, from which the first triple of the circular arches **R** has the radius **R1** smaller and the second triple of circular arches **R** has a greater radius **R2,** and the individual circular arches **R** alternate regularly in the direction of the perimeter of the polygonal contact surfaces **10, 40,** i.e. **R1, R2, R1,R2,R1,R2** and continue each other as presented in Figs. 3 and 4a, ideally they continue tangentially, i.e. the circular arches of radii **R1** and **R2** have a common tangent in the points of connection.In the plan, the conical polygonal contact surfaces **10, 40** have such a shape that the equilateral triangle inscribed in the polygonal contact surfaces **10, 40** has the centre of gravity in the centre of gravity of the plan of the polygonal contact surfaces **10, 40** and the vertices are in the central part of each circular arch **R** with a smaller radius **R1** and, at the same time, the equilateral triangle circumscribed around the conical polygonal contact surfaces **10, 40** has the centre of gravity in the centre of gravity of the plan of the conical polygonal contact surfaces **10, 40** and the centres of each of the edges of this equilateral triangle circumscribed contact the central part of each circular arch **R** with a greater radius **R2.** In principle, the circular arches **R** with a smaller radius **R1** are situated in the area of vertices of the equilateral triangle both inscribed and circumscribed and circular arches **R** with a greater radius **R2** are situated in the area of the edges of the equilateral triangle both inscribed and circumscribed.

## Claims

1. A camshaft with a removable double cam where the shaft is provided with a pair of the outer contact surfaces for placing each cam and each cam is provided with an inner contact surface, **characterized by that** on the shaft (1) is created one outer conical polygonal contact surface (10) for each cam (4) of the double cam, whereby each of the cams (4) of the double cam is provided with one inner conical polygonal contact surface (40) through which the cam (4) is replaceably mounted on a respective outer conical polygonal contact surface (10) on the shaft (1).

2. The camshaft with a removable double cam according to claim 1, **characterized by that** each of the outer conical polygonal contact surfaces (10) is directed with the apex of its creating cone towards another adjacent free end of the shaft (1).

3. The camshaft with a removable double cam according to claim 1, **characterized by that** both outer conical polygonal contact surfaces (10) are directed with the apex of their creating cone towards the same adjacent free end of the shaft (1).

4. The camshaft with a removable double cam according to any of claims 1 to 3, **characterized by that** the outer conical polygonal contact surfaces (10) and the inner conical polygonal contact surfaces (40) have the shape consisting of two triples of the same circular arches (R), of which the first triple of the circular arches (R) has a smaller radius (R1) and the second triple of circular arches (R) has a greater radius (R2) and the individual circular arches (R) alternate regularly and continue each other in the direction of the perimeter of the conical polygonal contact surfaces (10, 40).

5. The camshaft with a removable double cam according to any of claims 1 to 4, **characterized by that** the conical polygonal contact surfaces (10, 40) have an identical conicity in the range from 1:10 to 1:3.

6. The camshaft with a removable double cam according to claim 5, **characterized by that** the conical polygonal contact surfaces (10, 40) have an identical conicity of 1:5 or near 1:5.

7. The camshaft with a removable double cam according to any of claims 1 to 6, **characterized by that** both outer conical polygonal contact surfaces (10) are created on the common polygonal hub (2), which is created on the shaft (1), whereby in the faces (20) of the polygonal hub (2) in the direction parallel with the axis of rotation of the shaft (1) are created holes (200) with inner threads for screwing axial securing screws (3) over the rings (12), which are slid through their central hole on the shaft (1) and bear on the adjacent sidewall of the cam (4).

8. The camshaft with a removable double cam according to any of claims 1 to 6, **characterized by that** both outer conical polygonal contact surfaces (10) are created on the common polygonal hub (2), in which through holes are formed, whereby in one of the rings (12), which are slid through their central hole on the shaft (1) and bear against the adjacent side of the respective cam (4), are formed holes with inner threads and in the other ring (12) are created holes with steps for screw heads, with which saidrings (12) are drawn to each other and the cams (4) are axially secured on the shaft (1).

9. The camshaft with a removable double cam according to any of claims 1 to 6, **characterized by that** each outer conical polygonal contact surface (10) is created on an individual polygonal hub (2), whereby both polygonal hubs (2) are created on the shaft (1) and in the face (20) of each polygonal hub (2) in the direction parallel with the axis of rotation of the shaft (1) are formed holes (200) with inner threads for screwing axial securing screws (3) over the rings (12), which are slid through their central hole on the shaft (1) and bear against the adjacent sidewall of the cam (4).
